(19) Europäisches Patentamt
European Patent Office
Office européen des brevets

(11) EP 0 805 383 B1

(12) **EUROPEAN PATENT SPECIFICATION**

(45) Date of publication and mention of the grant of the patent:
**19.05.1999 Bulletin 1999/20**

(51) Int Cl.[6]: **G05D 13/62**, H02P 5/00, H02P 6/10

(21) Application number: **97301612.4**

(22) Date of filing: **11.03.1997**

(54) **Apparatus for controlling speed of a rotary motor**

Schaltung zur Regelung der Drehzahl eines Rotationsmotors

Dispositif de regulation de vitesse d'un moteur rotatif

(84) Designated Contracting States:
**DE FR GB NL**

(30) Priority: **30.04.1996 KR 9614008**

(43) Date of publication of application:
**05.11.1997 Bulletin 1997/45**

(73) Proprietor: **Samsung Electronics Co., Ltd.**
**Suwon-City, Kyungi-do (KR)**

(72) Inventors:
- **Seong, Goan-Soo**
  **Seocho-gu, Seoul (KR)**
- **Kim, Young-Hun**
  **Kwanak-gu, Seoul (KR)**
- **Ha, In-Jung**
  **Kwanak-gu, Seoul (KR)**

(74) Representative: **Chugg, David John et al**
**Appleyard Lees,**
**15 Clare Road**
**Halifax, West Yorkshire HX1 2HY (GB)**

(56) References cited:
**EP-A- 0 382 166**
**EP-A- 0 658 970**
**US-A- 5 298 841**
**US-A- 5 469 215**

- **IEEE TRANSACTIONS ON INDUSTRY APPLICATIONS, vol. 29, no. 1, 1 January 1993, pages 187-194, XP000358881 NOBUYUKI MATSUI ET AL: "AUTOCOMPENSATION OF TORQUE RIPPLE OF DIRECT DRIVE MOTOR BY TORQUE OBSERVER"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a speed control of a rotary motor, and more particularly, to a speed control apparatus for a rotary motor contained in a video cassette recorder (VCR), in which a disturbance applied to the rotary motor is estimated and corrected to improve a speed control characteristic.

In control of the motor speed, factors of varying a control quantity are generated due to peripheral conditions. Such factors called disturbances render accurate speed control difficult. If control errors have been generated due to the disturbance, a VCR driven by a motor will not function accurately. Therefore, a good speed control characteristic can be obtained only when an effect of disturbance is removed. Thus, such a disturbance is removed by estimating a torque of the disturbance of the motor by means of an observer. A control theory of suppressing such a load disturbance is being studied. One example is shown in Figure 1.

Figure 1 is a block diagram showing a conventional speed control apparatus of a rotary motor having a disturbance. The apparatus of Figure 1 is disclosed in a paper entitled "Autocompensation of Torque Ripple of Direct Drive Motor by Torque Observer" by Nobuyuki Matsui, Tatuso Makino, and Hirokazu Satoh (IEEE Trans. on Industry Applications, vol. 29, No. 1, January/February 1993, pp. 187-194). In Figure 1, an adder AI receives a reference angular speed $\omega^*_m$ according to a speed command and an angular speed $\omega_m$ fed back from a motor 15 and obtains a difference $\omega^*_m - \omega_m$. The difference $\omega^*_m - \omega_m$ is input to a speed controller 11. The speed controller 11 outputs a current command $i_v$* applied from the speed controller 11 and a disturbance removal command $i_L$* and obtains a corrected current command i*. The disturbance removal command $i_L$* is obtained by multiplying an estimated disturbance load torque (i) output from a torque observer 17 which receives an angular speed $\omega_m$ fed back from the motor 15 and an actual current i by a transfer function $K_T^{-1}$. Here, values without the superscript * are actual values and values with the superscript * are command values.

Meanwhile, the corrected current command i* is input to a current controller 13. The current controller 13 expressed as the transfer function $K_T$ supplies a torque command $\tau$* to the motor 15 in order to control a rotational speed of the motor 15 in response to the corrected current command i*. The motor 15 rotates at a speed corresponding to the torque command $\tau$* of the current controller 13.

The torque observer 17 which estimates an actual disturbance load torque $\tau_L$ applied to the motor 15, obtains an estimated disturbance load torque $\tau_L$(i) according to the following relationship (1) under the assumption that the disturbance is varied sufficiently slowly.

$$\hat{\tau}_L(i) = \varepsilon(i) + L\,\dot{\omega}_m(i) \qquad (1)$$

$$\varepsilon(i+1) = \hat{A}\,\varepsilon(i) + \hat{b}i_q(i) + \hat{K}\omega_m(i)$$

$$\hat{A} = 1+LT_s/J_n$$

$$\hat{b} = -LK_{Tn}T_s/J$$

$$\hat{K} = L(L+D_n)T_s/J_n$$

Here, Jn, Dn and $K_{Tn}$ are nominal values with respect to a moment of inertia J, a damping coefficient D and a torque constant $K_T$. L which is smaller than zero is an observer gain, $\varepsilon$ is a virtual variable, is an observer output, and $T_S$ is a sampling period.

The above relationship (1) can be combined to yield the following relationship (2).

$$\hat{\tau}_L(S)=\frac{1}{1+ST}\tau_L(S) \qquad (2)$$

Here $\tau_L$ is an actual disturbance load torque, is an estimated disturbance load torque and S is a Laplacian operator. In this case, $T=-T_s/\ln(1+LT_s/J_n)$ and 1/1+ST serves as a low-pass filter. Here, values without a subscript n are actual values and values with the subscript n are nominal values which are designed to be close to the actual values. Thus, if the actual disturbance load torque $\tau_L$ is slowly varied, it approximates the estimated disturbance load torque to completely remove the disturbance.

As described above, the conventional method of removing the disturbance by estimating the disturbance load torque of the motor requires a large calculation time due to the complex equations and thus, there are substantial problems associated with implementing it into hardware.

Also, D-VCR technique which has been on the rise nowadays, requires a compact motor capable of being controlled at a constant speed and in a high precision state. Such a motor itself has disturbance due to a cogging torque and bearing friction, and the disturbance of motor itself is involved with a high frequency. Since a bandwidth of the low-pass filter being the characteristic of 1/(1+ST) becomes large to follow up the fast varying disturbances, the observer gain L must be large accordingly. However, the observer gain cannot be enlarged without generating limitations in an actual implementation, and the disturbance is estimated with respect to time. As a result, a continuous estimation operation should be performed during the operation of a closed loop with respect to the speed control of the rotary motor. This requires a great deal of calculation and thus is difficult to implement in existing hardware. Also, such a disturbance of a motor itself having high frequency can not be removed by only disturbance estimation and compensation with the conventional method.

US 5,469,215 (Okuma Corporation) discloses method and apparatus for controlling an electric motor with compensation of torque ripple. In the system disclosed in this prior art document, an electric motor control system compensates torque ripples to control the rotation of an electric motor. Compensated current amplitudes corresponding to the torques, speeds and rotational positions, of the electric motor are stored in a memory. An address setting unit prepares a read address in the memory from a torque command, speed information and rotational motor position. A prepare read address is then used to read a torque error compensation data from the memory. An adder adds the torque error compensation data thus prepared to the torque command T to determine current amplitudes in the electric motor. A 3-phase current setting unit sets 3-phase AC current commands based on the current amplitudes and rotational motor position.

With a view to solving or reducing the above problem, it is an aim of embodiments of the present invention to provide a speed control apparatus for a rotary motor, which compensates an effect of a disturbance expressed as a function of an angular speed and an angular position via a learning function and removes a high frequency noise accumulated according to the increase of learning frequency.

According to the present invention, there is provided a speed control apparatus for a rotary motor, the speed control apparatus comprising: a motor for rotating at a speed based on a torque command ($\tau^*$) and outputting a present angular position ($\theta$) and a present angular speed ($\omega$) of the motor; speed measuring means for obtaining a speed error ($\omega_e$) representing a difference between an input reference angular speed ($\omega^*$) and the present angular speed ($\omega$); a speed controller for receiving said speed error ($\omega_e$) and outputting a current command ($i_v^*$) for controlling a rotational speed of the motor; a learning compensator for correcting an effect of a disturbance and outputting a resultant disturbance correction value ($i_L^*$); speed command compensating means for obtaining a corrected current command ($i^*$) by adding a value of the current command ($i_v^*$) output from the speed controller and the disturbance correction value ($i_L^*$) obtained in said learning compensator; and a current controller for receiving the corrected current command ($i^*$) and outputting the torque command ($\tau^*$) to the motor, the apparatus being characterised in that the learning compensator corrects the effect of the disturbance expressed as a function of an angular position ($\theta$) and an angular speed applied to the motor, via repetitive learning steps using the input reference angular speed ($\omega^*$), one among the speed error ($\omega_e$) from said speed measuring means and the current command ($i_v^*$) from said speed controller, and the present angular position ($\theta$) of the motor, removing a high frequency noise generated by the repetitive learning steps, and outputting the resultant disturbance correction value ($i_L^*$).

Preferably, said learning compensator comprises a low pass filter for low-pass-filtering one of the speed error ($\omega_e$) and the current command ($i_v^*$) to be used in the repetitive learning steps.

Preferably, said low pass filter has a cut-off frequency capable of suppressing the disturbance due to a cogging torque of the motor.

Said said low pass filter may be an IIR filter.

Said learning compensator preferably further comprises: a gainer for multiplying the output of said low pass filter by a predetermined learning compensation gain $K_L$ and outputting the result; a storage unit for outputting a disturbance correction value ($i^*_{LK}(\theta)$) corresponding to the present angular position ($\theta$) of the motor among disturbance correction values stored therein, and storing a presently input disturbance correction value at a storage position corresponding to the present angular position ($\theta$); and an adder for adding the output of said gainer and the disturbance correction value ($i^*_{LK}(\theta)$) output from said storage unit, and obtaining a disturbance correction value corresponding to the present angular position ($\theta$) of the motor to output the obtained value to said storage unit.

Preferably, said predetermined learning compensation gain value $K_L$ has a relationship of $0<K_L<K_P$, where $K_P$ is a proportional gain of the speed controller, when the speed error ($\omega_e$) is used in the repetitive learning steps, while it has a relationship of $0<K_L<1$ when the current command ($i^*_v$) is used therein.

Said adder preferably adds the output of said gainer and the output of said storage unit when the repetitive learning steps are performed, wherein said adding operation is not performed when no repetitive learning steps are executed.

Preferably, said repetitive learning steps are performed when the motor rotates at a steady state according to the input reference angular speed ($\omega^*$).

Preferably, said learning compensator comprises: a gainer for receiving one of the speed error ($\omega_e$) and the current command ($i^*_v$) to be used in the repetitive learning steps, and multiplying and outputting the received data by a predetermined learning compensation gain $K_L$; a storage unit for outputting a disturbance correction value ($i^*_{LK}(\theta)$) corresponding to the present angular position ($\theta$) of the motor among disturbance correction values stored therein and storing a presently input disturbance correction value at a storage position corresponding to the present angular position ($\theta$) of the motor; a first adder for adding the output of said gainer and the disturbance correction value ($i^*_{LK}(\theta)$) output from said storage unit, and obtaining a disturbance correction value corresponding to the present angular position ($\theta$) of the motor; a low pass filter for low-pass-filtering the disturbance correction value obtained by said first adder; and a second adder for outputting the output of said low pass filter as a disturbance correction value corresponding to the present angular position ($\theta$) of the motor, to said storage unit.

Said low pass filter preferably has a cut-off frequency capable of suppressing the disturbance due to the cogging torque of the motor.

Said low pass filter may be a FIR filter.

Said predetermined learning compensation gain value $K_L$ preferably has a relationship of $0<K_L<K_P$, where $K_P$ is a proportional gain of the speed controller, when the speed error ($\omega_e$) is used in the repetitive learning steps, while a relationship of $0<K_L<1$ when the current command ($i^*_v$) is used therein.

Preferably, said adder adds the output of said gainer and the output of said storage unit when the repetitive learning steps are performed, while said adder outputs the output itself of said storage unit to said low pass filter.

Said repetitive learning steps are preferably performed when the motor rotates in a steady state according to the input reference angular speed ($\omega^*$).

The apparatus may comprise: pulse signal and frequency signal generation means for generating a pulse signal (PG) and a frequency signal (FG) according to the rotation of the motor; a storage unit for storing disturbance correction values ($i^*_{LK}$) according to a rotation of the motor; and control means for generating the corrected current command ($i^*$) corresponding to a present angular position ($\theta$) of said motor, by using the pulse signal (PG) and the frequency signal (FG) of said motor and the disturbance correction value ($i^*_{LK}$) stored in said storage unit and supplying the generated corrected current command ($i^*$) to said current controller, wherein said control means performs the steps of: (a) obtaining the present angular position of the motor and a corresponding current command thereto using the pulse signal (PG) and the frequency signal (FG) of said motor; (b) correcting an effect of the disturbance expressed as a function of an angular position and an angular speed applied to the motor, via repetitive learning steps using the input reference angular speed ($\omega^*$) of said motor, the obtained present angular position and the corresponding current command, generating a disturbance correction value in which a high frequency noise generated in the repetitive learning step is removed, and storing the generated disturbance correction value at a storage position corresponding to the present angular position in said storage unit; and (c) obtaining the corrected current command ($i^*$) applied to said current controller by adding a value of the obtained current command and the generated disturbance correction value.

Preferably, said step (b) comprises the sub-step (b1) of low-pass-filtering the current command corresponding to said present angular position.

Said sub-step (b1) may use a cut-off frequency capable of suppressing the disturbance due to the cogging torque of the motor.

Said step (b) may comprise the sub-steps of: (b2) multiplying and outputting said low-pass-filtered current command by a predetermined learning compensation gain; and (b3) adding the disturbance correction value corresponding to the present angular position of the motor among disturbance correction values stored in said storage unit and the obtained signal in said step (b2), thereby obtaining a new disturbance correction value corresponding to the present angular position of the motor, wherein the steps for obtaining said new disturbance correction values are performed repetitively until all new disturbance correction values relevant to one rotation of the motor are obtained.

Said predetermined learning compensation gain is preferably greater than zero and smaller than 1 in magnitude.

Said control means adopt the disturbance correction value corresponding to the present angular position among the disturbance correction values stored in said storage unit to obtain a corrected current command if the current command obtained from the pulse signal (PG) and frequency signal (FG) of said motor is smaller than a predetermined value.

Said control means preferably obtains a disturbance correction value via repetitive learning steps when the motor rotates in a steady state according to the input reference angular speed.

For a better understanding of the invention, and to show how embodiments of the same may be carried into effect, reference will now be made, by way of example, to the accompanying diagrammatic drawings, in which:

Figure 1 is a block diagram of a conventional speed control apparatus for a rotary motor having a disturbance;

Figure 2 is a block diagram of a speed control system for a rotary motor having a disturbance according to a preferred embodiment of the present invention;

Figure 3 is a block diagram of a speed control system for a rotary motor having a disturbance according to another embodiment of the present invention;

Figure 4 is a detailed view showing a learning compensator;

Figure 5 is a view showing an example of how the systems of Figure 2 and Figure 3 are realized into hardware;

Figure 6 is a flowchart diagram for explaining the operation of Figure 5 apparatus; and

Figures 7A and 7B are detailed flowchart diagrams associated with Figure 6.

Preferred embodiments of the present invention will be described below in more detail with reference to the accompanying drawings.

A preferred embodiment of the present invention shown in Figure 2 is similar to the conventional apparatus of Figure 1. However, as shown in Figure 2, a learning compensator 27 is used in the preferred embodiment instead of a torque observer 17. The learning compensator 27 receives a reference angular speed $\omega^*$ according to a speed command, the output $i_v^*$ of a speed controller 21 and an angular position $\theta$ fed back from a motor 25 to produce an output $i^*_{LK}(\theta)$ for correcting an effect of the disturbance.

The system of Figure 3 showing another embodiment of the present invention is similar to the Figure 2 system. A learning compensator 37 receives a speed error $\omega_e$ output from a first adder A3 instead of a current command $i_v^*$ output from the speed controller 21, to produce the output $i^*_{LK}(\theta)$ for correcting an effect of the disturbance. In Figure 2 and Figure 3, the same reference numerals are used for the same construction.

If an external learning flag L_on is inputted after the motor 25 being operated in steady state, the system of Figure 2 or Figure 3 starts the disturbance removal operation of the motor 25 via repetitive learning. The present angular speed $\omega$ in the motor 25 is outputted to the first adder A3, and the present angular position $\theta$ inputs the learning compensator 27 or 37. The first adder A3 produces a speed error $\omega_e$ representing a difference between the present angular speed $\omega$ and a reference angular speed $\omega^*$. The speed controller 21 which receives the speed error $\omega^*$ output from the first adder A3 maintains the following relationship (3) between the torque and the angular speed $\omega$ of the motor 25.

$$J\frac{dw}{dt}+\tau_L=T=K_Ti \qquad (3)$$

Here, J is the moment of inertia, $\omega$ is a present angular speed, $\tau_L$ is a load torque, T is an input torque and i is a current in motor coil.

If a load torque is zero, the motor 25 has no load disturbance. Thus, an excellent speed control characteristic can be obtained using a general speed controller. If there is a load torque $\tau_L$, the speed control characteristic is lowered. In the embodiments of the present invention, the learning compensator 27 or 37 has been proposed in which an effect of the disturbance $H(\theta,\theta)$ expressed as a function of an angular position $\theta$ and angular velocity $\theta$ is removed via repetitive learning.

In case of constant speed control, since $\theta$ equals $\omega^*t$, the output $i^*_{LK}$ $(\theta)$ of the learning compensator 27 or 37 is a periodic function having a period T of $2\pi/\omega^*$ with respect to the speed command $\omega^*$ and the time, and is defined by the following relationship (4).

$$i_{LK}(\omega^*,\theta)=i_{L(K\text{-}1)}(\omega^*,\theta)+mZ_{(K\text{-}1)}(\theta) \qquad (4)$$

Here, m is a repetitive learning gain and 0<m<1, and $Z_{(K-1)}$ is obtained by sampling the output of the speed controller 21 during a steady state for a period T.

In Figure 4 showing the detailed block diagram of the learning compensator 27 or 37, the learning compensator includes a low pass filter 41 for removing a high frequency noise from the input current command $i_v^*$ or the speed error $\omega_e$, and a gainer 43 for multiplying the low-pass-filtered current command $i_v^*$ or the speed error $\omega_e$ by the learning

compensation gain $K_L$. A third adder 45 connected to an output end of the gainer 43 adds a disturbance correction value prior to one rotation of the motor and the present output from gainer 43 to obtain a new disturbance correction value. A delay unit 47 connected to an output end of the third adder 45 delays the disturbance correction value obtained from the third adder 45 during the time as long as the motor rotates once, the delayed disturbance correction value is fedback to the third adder 45.

The operation of the learning compensator 27 or 37 will be described below in more detail with reference to Figure 4. The low pass filter 41 low-pass-filters the received speed error $\omega_e$ or current command $i_v$*. The low pass filter 41 removes a high frequency noise accumulated by the increase of learning frequency. As a result, the output of the learning compensator 27 or 37 converges in to the disturbance component $H(\theta,\theta)$ being a function of the angular speed and the angular position, and thus the system is stabilized. An IIR (Infinite impulse response) filter is employed in the low pass filter 41. If the low pass filter 41 is located between the third adder 45 and the delay unit 47, a FIR filter can be used therein. A cut-off frequency of the low pass filter 41 is set just to suppress the disturbance due to a cogging torque of the motor 25. The output of the low pass-filter 41 is gain-controlled according to a gain value $K_L$ of the gainer 43. The gain value $K_L$ varies according to an input value of the low pass filter 41. That is, in the case where the gainer 43 receives the speed error $\omega_e$, the gain value $K_L$ should be less than a proportional gain $K_P$ of the speed controller 21 ($0<K_L<K_P$), whereas, when the gainer 43 receives the current command $i_v$*, the gain value $K_L$ should be less than "1" ($0<K_L<1$). The speed error $\omega_e$ or the current command $i_v$* gain-controlled via the gainer 43 is input to the third adder 45. The third adder 45 adds the outputs of the delay unit 47 and the gainer 43 while the external learning flag L_on is being enabled. Here, the output of the delay unit 47 is a disturbance correction value prior to one rotation of the motor. The new disturbance correction value output from the third adder 45 is supplied to the delay unit 47. The delay unit 47 uses the present angular position $\theta$ of the motor 25 received through a clock end, as an address n with regard to the disturbance correction value applied from the third adder 45 to thereby store the disturbance correction value. The stored disturbance correction value is delayed for the time $D^{-2\pi}$ as long as the motor 25 rotates once, and then outputted.

The learning compensator shown in Figure 4 is represented by the following relationship (5) regardless of whether an input is the speed error $\omega_e$ or the current command $i_v$*.

$$i^*_{L(K+1)}(n \cdot \Delta\ \theta) = i^*_{LK}(n \cdot \Delta\ \theta) + K_L \cdot LPF\ (i_v^*(n \cdot \Delta\ \theta)) \qquad (5)$$

If the low pass filter 41 is located between the third adder 45 and the delay unit 47, the learning compensator is denoted by the following relationship (6).

$$i^*_{L(K+1)}(n \cdot \Delta\ \theta) = LPF(i^*_{LK}(n \cdot \Delta\ \theta) + K_L\ (i_v^*(n \cdot \Delta\ \theta))) \qquad (6)$$

The relationship (6) is also adopted regardless of whether an input is the speed error $\omega_e$ or the current command $i_v$*. In the relationships (5) and (6), $n \cdot \Delta\ \theta$ is an address with regard to the delay unit 47.

Returning to Figure 2 and Figure 3, the disturbance correction value $i^*_{LK}(\theta)$ obtained in the learning compensator 27 is inputted to the second adder A4 which adds the current command $i_v$* applied from the current controller 21 and the disturbance correction value $i^*_{LK}(\theta)$ applied from the learning compensator 27 to obtain a corrected current command i*, and the corrected current command i* is inputted to the current controller 23. The current controller 23 outputs a torque command corresponding to the input corrected current command i*. The fourth adder A5 of the motor 25 subtracts the disturbance component $H(\theta,\theta)$ from the torque command applied from the current controller 23, and outputs the resultant corrected torque command $\tau$*. A speed of a rotating unit 25' which is represented as a transfer function 1/(JS+B), is controlled according to the torque command $\tau$*. As a result of speed control, the present angular speed $\omega$ output from the rotating unit 25' is again fedback into the first adder A3 which uses the present angular speed $\omega$ for calculating a speed error $\omega_e$ with respect to the reference angular speed $\omega$*. In case of Figure 2, the speed error $\omega_e$ is inputted to the speed controller 21, and in case of Figure 3, the speed error $\omega_e$ is inputted to the learning compensator 37. The speed controller 21 outputs the current command $i_v$* for controlling a rotational speed of the motor 25 according to the input speed error $\omega_e$ to the second adder A4. In Figure 2, the current command $i_v$* is again input to the learning compensator 27. The present angular speed is output as an angular position $\theta$ by means of an encoder 25" expressed as a transfer function 1/S and is fedback into the learning compensator 27.

Meanwhile, after the learning flag L_on is disabled, the learning compensator 27 receives the speed error $\omega_e$ output from the first adder A3 as an address, and outputs a disturbance correction value stored in a storage position of the delay unit 47 indicated by the address. An effective speed control can be implemented since the speed control after completion of the learning compensation is performed with only that the output $i_v$* of the speed controller 21 is added to the disturbance correction value $i_L$* output from the learning compensator 27 or 37.

As a result of simulation with respect to the systems of Figures 2 and Figure 3, the disturbance $H(\theta,\theta)$ is removed by the output $i_L$* of the learning compensator 27 via a few iterations of repetitive learning process.

Figure 5 is an example showing how the speed control system for the rotary motor shown in Figure 2 or Figure 3 may be realized into hardware. A microcomputer 51 of Figure 5 receives a pulse signal PG and a frequency signal FG generated according to rotation of the motor 25 and a mode command concerning repetitive learning, and performs disturbance estimation and compensation via the repetitive learning. The microcomputer 51 uses the pulse signal PG and the frequency signal FG generated according to rotation of the motor 25 to obtain the present angular speed $\omega$ and the angular position $\theta$ of the motor 25. A storage unit 55 connected to the microcomputer 51 stores current commands and disturbance correction values obtained via repetitive learning with regard to one rotation of the motor 25. The storage unit 55 uses a store media, such as EEPROM, PROM or flash memory, wherein the EEPROM is employed. A current command i* output from the microcomputer 51 in the form of PWM (pulse width modulation) is smoothed via a low pass filter 53 and then inputted to a current controller 23. In the case that the current command i* output from the microcomputer 51 is digital-to-analog converted, the current command is directly inputted to the current controller 23. The current controller 23 controls the rotational speed of the motor 25 according to the output of the low pass filter 53. The microcomputer 51 performs the functions of the first and second adders A3 and A4, the speed controller 21 and the learning compensator 27 or 37 with program.

Figure 6 is a flowchart diagram for explaining the operation of the microcomputer 51 relating to the repetitive learning process. Figure 7A is a flowchart showing a main routine for executing a repetitive learning operation during predetermined times and Figure 7B is a flow chart showing an interrupt routine to obtain the optimum disturbance correction values.

Referring to Figure 6, when the operation starts, the microcomputer 51 initializes the learning flag L_on and the number K of the repetitive learning, the address pointer n of a disturbance correction value corresponding to the present angular position $\theta$, and the disturbance correction values $i^*_{LK}$ into zeros (step 610). Then, general motor speed control for rotating the motor at a desired speed is performed in step 620. If it is determined that the motor rotates in a steady state in step 630, the microcomputer 51 stores current commands $i_v$* during one period of rotation of the motor in step 640, and performs the main routine for repetitive learning shown in Figure 7A in step 650.

Referring to Figure 7A, the microcomputer 51 checks whether a motor rotation command is externally applied in step 621. When the motor rotation command is not inputted, the microcomputer 51 prohibits an interrupt routine and stops the rotation of the motor 25 in step 622, and then performs the same operation as the initialization step 610. When the motor rotation command is applied in step 621, the microcomputer 51 rotates the motor 25 according to the speed command being inputted together with the motor rotation command, and performs the interrupt routine in step 623.

Referring to Figure 7B showing in detail the interrupt routine of step 623, the microcomputer 51 increases the value of an address n ($n=\theta, 0<\theta\leq 2\pi$) by "1" whenever the frequency signal FG generated owing to the rotation of the motor 25 is inputted in step 701. Here, the frequency signal FG is generated by a FG generator 35 used for detecting the rotation of the motor 25. The microcomputer 51 checks whether the motor 25 rotates once using the value of the address n in step 702. If the motor 25 rotates once, the microcomputer 51 again initializes the value of the address to '0' in step 703. In step 704, the microcomputer 51 obtains a present angular speed $\omega$ using the frequency signal FG of the FG generator 35, and calculates a speed error using the obtained present angular speed $\omega$ and the reference angular speed $\omega$* according to the rotational command. Then, the current command $i_v$* corresponding to the calculated speed error in step 705 is calculated. The microcomputer 51 reads the corresponding disturbance correction value $i_{LK}$*(n) from the storage unit 55 using the value of address corresponding to the present angular position $\theta$ of the motor in step 706, and adds the obtained current command $i_v$* and the disturbance correction value $i_{LK}$*(n) to obtain a corrected current command i* in step 707. The corrected current command i* output from the microcomputer 51 is applied to the motor 25 through the low pass filter 53 and the current controller 23.

Meanwhile, the microcomputer 51 checks whether the learning flag L_on is '1' in step 708. If it is not '1', the interrupt routine stops and returns to the step 624 of Figure 7A. In contrast, if it is '1' in step 708, the microcomputer 51 performs the step 709 of obtaining disturbance correction value $i^*_{L(K+1)}(n)$ using the above relationship (5). That is, the microcomputer 51 executes the low-pass-filtering and multiplication of the gain $K_L$ with respect to the current command $i_v$* corresponding to the value of the address, and then obtains a new disturbance correction value by adding the disturbance correction value read out from the storage unit 55. In step 709, the relationship (6) can be used instead of the relationship (5). In this case, the disturbance correction value read out from the storage unit 55 instead of a current command is low-pass-filtered. The microcomputer 51 stores the new disturbance correction value $i^*_{L(K+1)}(n)$ at the store position of the storage unit 55. Such learning operation is performed with respect to all the disturbance correction values stored in the storage unit 55. The microcomputer 51 checks whether the learning for one rotation of the motor i.e. one period, is finished in step 710. If it is not finished, the microcomputer 51 performs the operation of step 709 repeatedly. On the other hand, if it is finished, the microcomputer 51 initializes the learning flag L_on to '0' in step 711 and terminates the interrupt routine, and then returns to the step 624 of Figure 7A.

Meanwhile, the microcomputer 51 performs the step 624 for checking whether the learning flag L_on is '0' during executing the interrupt routine of Figure 7B. If the learning flag L_on is '0', it means that the learning for one periodic rotation of the motor is accomplished. Therefore, if the learning flag L_on is not '0', the microcomputer 51 waits until the interrupt routine is finished. If the learning flag L_on is '0', it is checked whether the speed of the motor 25 is in a steady state in step 630. If it is in a steady state, the microcomputer 51 checks whether the number K of learning reaches the desired repetition frequency in step 651. Until it reaches the desired repetition frequency, the microcomputer 51 increases a number K of learning by one in step 652 and sets the learning flag L_on to '1' in step 653, and then returns to step 621.

In step 651, when the number of learning K reaches the desired repetition frequency, the microcomputer 51 finishes the main routine of Figure 7A and returns to step 670 of Figure 6. In step 670, the microcomputer 51 uses the present angular speed $\omega$ of the motor and the reference angular speed $\omega^*$ according to the rotational command to determine whether the obtained current command $i^*_v$ is smaller than a predetermined threshold B. What the obtained current command $i^*_v$ is smaller than a predetermined threshold B means is that the disturbance to be loaded on the motor 25 is compensated sufficiently. If the current command $i^*_v$ is larger than or equal to the predetermined threshold B, the microcomputer 51 returns to step 620 and performs the learning operation again. If the current command $i^*_v$ is smaller than the threshold B in step 670, the microcomputer 51 judges that the disturbance is compensated sufficiently and then stores the disturbance correction values $i^*_L$ in the storage unit 55 in step 680. Hereafter, the microcomputer 51 performs the disturbance removal using the disturbance correction values $i^*_L$ stored in the storage unit 55.

As described above, the speed control apparatus for a rotary motor according to the present invention determines and stores the disturbance correction values for compensating an effect of the disturbance via a repetitive learning process, and performs the speed control using the stored disturbance correction values, to thereby provide an advantage that simple and efficient speed control can be performed. Also, the speed control of the motor is stabilized regardless of the frequency of repetition of learning since a high frequency noise generated by the repetitive learning process is removed by means of the low pass filtering.

While only certain embodiments of the invention have been specifically described herein, it will be apparent that numerous modifications may be made thereto without departing from the scope of the invention.

## Claims

**1.** A speed control apparatus for a rotary motor, the speed control apparatus comprising:

a motor (25) for rotating at a speed based on a torque command ($\tau^*$) and outputting a present angular position ($\theta$) and a present angular speed ($\omega$) of the motor (25);

speed measuring means (A3) for obtaining a speed error ($\omega_e$) representing a difference between an input reference angular speed ($\omega^*$) and the present angular speed ($\omega$);

a speed controller (21) for receiving said speed error ($\omega_e$) and outputting a current command ($i_v^*$) for controlling a rotational speed of the motor (25);

a learning compensator (27) for correcting an effect of a disturbance and outputting a resultant disturbance correction value ($i_L^*$);

speed command compensating means (A4) for obtaining a corrected current command ($i^*$) by adding a value of the current command ($i_v^*$) output from the speed controller (21) and the disturbance correction value ($i_L^*$) obtained in said learning compensator (27); and

a current controller (23) for receiving the corrected current command ($i^*$) and outputting the torque command ($\tau^*$) to the motor (25),

the apparatus being characterised in that the learning compensator (27) corrects the effect of the disturbance expressed as a function of an angular position ($\theta$) and an angular speed applied to the motor (25), via repetitive learning steps using the input reference angular speed ($\omega^*$), one among the speed error ($\omega_e$) from said speed measuring means (A3) and the current command ($i_v^*$) from said speed controller (21), and the present angular position ($\theta$) of the motor (25), removing a high frequency noise generated by the repetitive learning steps, and outputting the resultant disturbance correction value ($i_L^*$).

2. The speed control apparatus for a rotary motor according to claim 1, wherein said learning compensator (27) comprises a low pass filter (41) for low-pass-filtering one of the speed error ($\omega_e$) and the current command ($i_v$*) to be used in the repetitive learning steps.

3. The speed control apparatus for a rotary motor according to claim 2, wherein said low pass filter (41)has a cut-off frequency capable of suppressing the disturbance due to a cogging torque of the motor (25).

4. The speed control apparatus for a rotary motor according to claim 2 or 3, wherein said low pass filter (41) is an IIR filter.

5. The speed control apparatus for a rotary motor according to claim 2, 3 or 4, wherein said learning compensator (27) further comprises:

a gainer (43) for multiplying the output of said low pass filter (41) by a predetermined learning compensation gain $K_L$ and outputting the result;

a storage unit (47) for outputting a disturbance correction value ($i^*_{LK}(\theta)$) corresponding to the present angular position ($\theta$) of the motor (25) among disturbance correction values stored therein, and storing a presently input disturbance correction value at a storage position corresponding to the present angular position ($\theta$); and

an adder (45) for adding the output of said gainer (43) and the disturbance correction value ($i^*_{LK}(\theta)$) output from said storage unit (47), and obtaining a disturbance correction value corresponding to the present angular position ($\theta$) of the motor (25) to output the obtained value to said storage unit (47).

6. The speed control apparatus for a rotary motor according to claim 5, wherein said predetermined learning compensation gain value $K_L$ has a relationship of $0<K_L<K_P$, where $K_P$ is a proportional gain of the speed controller (21), when the speed error ($\omega_e$) is used in the repetitive learning steps, while it has a relationship of $0<K_L<1$ when the current command ($i^*_v$) is used therein.

7. The speed control apparatus for a rotary motor according to claim 5, wherein said adder (45) adds the output of said gainer (43) and the output of said storage unit (47) when the repetitive learning steps are performed, wherein said adding operation is not performed when no repetitive learning steps are executed.

8. The speed control apparatus for a rotary motor according to claim 7, wherein said repetitive learning steps are performed when the motor (25) rotates at a steady state according to the input reference angular speed ($\omega$*).

9. The speed control apparatus for a rotary motor according to claim 1, wherein said learning compensator (27) comprises:

a gainer (43) for receiving one of the speed error ($\omega_e$) and the current command ($i^*_v$) to be used in the repetitive learning steps, and multiplying and outputting the received data by a predetermined learning compensation gain $K_L$;

a storage unit (47) for outputting a disturbance correction value ($i^*_{LK}(\theta)$)corresponding to the present angular position ($\theta$) of the motor (25) among disturbance correction values stored therein and storing a presently input disturbance correction value at a storage position corresponding to the present angular position ($\theta$) of the motor (25);

a first adder (45) for adding the output of said gainer (43) and the disturbance correction value ($i^*_{LK}(\theta)$) output from said storage unit (47), and obtaining a disturbance correction value corresponding to the present angular position ($\theta$) of the motor (45);

a low pass filter (41) for low-pass-filtering the disturbance correction value obtained by said first adder (45); and

a second adder for outputting the output of said low pass filter (41) as a disturbance correction value corresponding to the present angular position ($\theta$) of the motor (25), to said storage unit (47).

10. The speed control apparatus for a rotary motor according to claim 9, wherein said low pass filter (41) has a cut-off frequency capable of suppressing the disturbance due to the cogging torque of the motor (25).

**11.** The speed control apparatus for a rotary motor according to claim 9 or 10, wherein said low pass filter (41) is an FIR filter.

**12.** The speed control apparatus for a rotary motor according to claim 9, 10 or 11, wherein said predetermined learning compensation gain value $K_L$ has a relationship of $0<K_L<K_P$, where $K_P$ is a proportional gain of the speed controller (21), when the speed error ($\omega_e$) is used in the repetitive learning steps, while a relationship of $0<K_L<1$ when the current command ($i^*_v$) is used therein.

**13.** The speed control apparatus for a rotary motor according to claim 9, 10, 11 or 12, wherein said adder (45) adds the output of said gainer (43) and the output of said storage unit (47) when the repetitive learning steps are performed, while said adder (45) outputs the output itself of said storage unit (47) to said low pass filter (41).

**14.** The speed control apparatus for a rotary motor according to claim 13, wherein said repetitive learning steps are performed when the motor (25) rotates in a steady state according to the input reference angular speed ($\omega^*$).

**15.** A speed control apparatus for a rotary motor according to claim 1, the apparatus comprising:

pulse signal and frequency signal generation means (33, 35) for generating a pulse signal (PG) and a frequency signal (FG) according to the rotation of the motor (25);

a storage unit (55) for storing disturbance correction values ($i^*_{LK}$) according to a rotation of the motor (25); and

control means (51) for generating the corrected current command ($i^*$) corresponding to a present angular position ($\theta$) of said motor (25), by using the pulse signal (PG) and the frequency signal (FG) of said motor (25) and the disturbance correction value ($i^*_{LK}$) stored in said storage unit (55) and supplying the generated corrected current command ($i^*$) to said current controller (23), wherein said control means (51) performs the steps of:

(a) obtaining the present angular position of the motor (25) and a corresponding current command thereto using the pulse signal (PG) and the frequency signal (FG) of said motor;

(b) correcting an effect of the disturbance expressed as a function of an angular position and an angular speed applied to the motor (25), via repetitive learning steps using the input reference angular speed ($\omega^*$) of said motor (25), the obtained present angular position and the corresponding current command, generating a disturbance correction value in which a high frequency noise generated in the repetitive learning step is removed, and storing the generated disturbance correction value at a storage position corresponding to the present angular position in said storage unit (55); and

(c) obtaining the corrected current command ($i^*$) applied to said current controller (23) by adding a value of the obtained current command and the generated disturbance correction value.

**16.** The speed control apparatus for a rotary motor according to claim 15, wherein said step (b) comprises the substep (b1) of low-pass-filtering the current command corresponding to said present angular position.

**17.** The speed control apparatus for a rotary motor according to claim 16, wherein said sub-step (b1) uses a cut-off frequency capable of suppressing the disturbance due to the cogging torque of the motor (25).

**18.** The speed control apparatus for a rotary motor according to claim 16, wherein said step (b) comprises the substeps of:

(b2) multiplying and outputting said low-pass-filtered current command by a predetermined learning compensation gain; and

(b3) adding the disturbance correction value corresponding to the present angular position of the motor (25) among disturbance correction values stored in said storage unit (55) and the obtained signal in said step (b2), thereby obtaining a new disturbance correction value corresponding to the present angular position of the motor (25),

wherein the steps for obtaining said new disturbance correction values are performed repetitively until all new disturbance correction values relevant to one rotation of the motor (25) are obtained.

**19.** The speed control apparatus for a rotary motor according to claim 18, wherein said predetermined learning compensation gain is greater than zero and smaller than 1 in magnitude.

**20.** The speed control apparatus for a rotary motor according to claim 15, wherein said control means (51)adopts the disturbance correction value corresponding to the present angular position among the disturbance correction values stored in said storage unit (55) to obtain a corrected current command if the current command obtained from the pulse signal (PG) and frequency signal (FG) of said motor (25) is smaller than a predetermined value.

**21.** The speed control apparatus for a rotary motor according to claim 15, wherein said control means (51) obtains a disturbance correction value via repetitive learning steps when the motor (25) rotates in a steady state according to the input reference angular speed.

**Patentansprüche**

**1.** Eine Drehzahlregelvorrichtung für einen Rotationsmotor, wobei die Drehzahlregelvorrichtung umfaßt:

einen Motor (25), um sich mit einer Drehzahl auf der Grundlage eines Drehmomentbefehls ($\tau$*) zu drehen und eine gegenwärtige Winkelstellung ($\theta$) und eine gegenwärtige Winkelgeschwindigkeit ($\omega$) des Motors (25) auszugeben;

eine Drehzahlmeßeinrichtung (A3), um einen Drehzahlfehler ($\omega_e$) zu erhalten, der die Differenz zwischen einer eingegebenen Bezugswinkelgeschwindigkeit ($\omega$*) und der gegenwärtigen Winkelgeschwindigkeit ($\omega$) darstellt;

einen Drehzahlregler (21), der den genannten Drehzahlfehler ($\omega_e$) erhält und einen Strombefehl ($i_V$*) ausgibt, um die Drehzahl des Motors (25) zu regeln;

ein Lernausgleicher (27), um die Störungswirkung zu korrigieren und einen sich ergebenden Störungskorrekturwert ($i_L$*) auszugeben;

eine Drehzahlbefehlsausgleichseinrichtung (A4), um einen korrigierten Strombefehl (i*) zu erhalten, indem ein Wert des Strombefehls ($i_V$*), der von dem Drehzahlregler (21) ausgegeben wird, und der Störungskorrekturwert ($i_L$*) addiert werden, der in dem genannten Lernausgleicher (27) erhalten wird; und

einen Stromregler (23), der den korrigierten Strombefehl (i*) erhält und den Drehmomentbefehl ($\tau$*) an den Motor (25) ausgibt.

wobei die Vorrichtung **dadurch gekennzeichnet** ist, daß der Lernausgleicher (27) die Wirkung der Störung, die als eine Funktion einer Winkelstellung ($\theta$) und einer Winkelgeschwindigkeit ausgedrückt wird, die auf den Motor (25) angewendet wird, über Wiederholungslernschritte korrigiert, wobei die Eingangsbezugswinkelgeschwindigkeit ($\omega$*), der Drehzahlfehler ($\omega_e$) von der genannten Drehzahlmeßeinrichtung (A3) oder der Strombefehl ($i_V$*) von dem genannten Drehzahlregler (21), und die gegenwärtige Winkelstellung ($\theta$) des Motors (25) verwendet werden, Rauschen hoher Frequenz entfernt wird, das durch die sich wiederholenden Lernschritte erzeugt wird, und der sich ergebende Störungskorrekturwert ($i_L$*) ausgegeben wird.

**2.** Die Drehzahlregelvorrichtung für einen Rotationsmotor gemäß Anspruch 1, wobei der genannte Lernausgleicher (27) ein Tiefpaßfilter (41) zur Tiefpaßfilterung des Drehzahlfehlers ($\omega_e$) oder des Strombefehls ($i_V$*) zur Verwendung in den sich wiederholenden Lernschritten umfaßt.

**3.** Die Drehzahlregelvorrichtung für einen Rotationsmotor gemäß Anspruch 2, wobei das genannte Tiefpaßfilter (41) eine Abschneidefrequenz aufweist, die die Störung aufgrund eines welligen Drehmoments des Motors (25) unterdrückt.

**4.** Die Drehzahlregelvorrichtung für einen Rotationsmotor gemäß Anspruch 2 oder 3, wobei das genannte Tiefpaßfilter (41) ein IIR Filter ist.

**5.** Die Drehzahlregelvorrichtung für einen Rotationsmotor gemäß Anspruch 2, 3 oder 4, wobei der genannte Lernausgleicher (27) des weiteren umfaßt:

eine Verstärkungseinrichtung (43) zur Multiplikation des Ausgangs des genannten Tiefpaßfilters (41) mit einer vorbestimmten Lernausgleichsverstärkung $K_L$ und zur Ausgabe des Ergebnisses;

eine Speichereinheit (47) zur Ausgabe eines Störungskorrekturwerts ($i^*_{LK}(\theta)$) entsprechend der gegenwärtigen Winkelstellung ($\theta$) des Motors (25) aus darin gespeicherten Störungskorrekturwerten, und zur Speicherung eines gegenwärtig eingegebenen Störungskorrekturwerts an einer Speicherstelle, die der gegenwärtigen Winkelstellung ($\theta$) entspricht; und

einen Addierer (45) zur Addition des Ausgangs der genannten Verstärkungseinrichtung (43) und des Störungskorrekturwerts ($i^*_{LK}(\theta)$), der von der genannten Speichereinheit (47) ausgegeben wird, und zum Erhalt eines Störungskorrekturwerts entsprechend der gegenwärtigen Winkelstellung ($\theta$) des Motors (25), um den erhaltenen Wert an die genannte Speichereinheit (47) auszugeben.

**6.** Die Drehzahlregelvorrichtung für einen Rotationsmotor gemäß Anspruch 5, wobei der genannte vorbestimmte Lernausgleichsverstärkungswert $K_L$ die Beziehung $0<K_L<K_P$ aufweist, wobei Kp eine proportionale Verstärkung des Drehzahlreglers (21) ist, wenn der Drehzahlfehler ($\omega_e$) in den Lernwiederholungsschritten verwendet wird, während er die Beziehung $0<K_L<1$ aufweist, wenn der Strombefehl ($i_v^*$) darin verwendet wird.

**7.** Die Drehzahlregelvorrichtung für einen Rotationsmotor gemäß Anspruch 5, wobei der genannte Addierer (45) den Ausgang der genannten Verstärkungseinrichtung (43) und den Ausgang der genannten Speichereinheit (47) addiert, wenn die Lernwiederholungsschritte durchgeführt werden, wobei der genannte Additionsvorgang nicht durchgeführt wird, wenn keine Lernwiederholungsschritte ausgeführt werden.

**8.** Die Drehzahlregelvorrichtung für einen Rotationsmotor gemäß Anspruch 7, wobei die genannten Lernwiederholungsschritte durchgeführt werden, wenn sich der Motor (25) in einem stabilen Zustand gemäß der eingegebenen Bezugswinkelgeschwindigkeit ($\omega^*$) dreht.

**9.** Die Drehzahlregelvorrichtung für einen Rotationsmotor gemäß Anspruch 1, wobei der genannte Lernausgleicher (27) umfaßt:

eine Verstärkungseinrichtung (43), die den Drehzahlfehler ($\omega_e$) oder den Strombefehl ($i_v^*$)erhält, der in den Lernwiederholungsschritten zu verwenden ist, und die erhaltene Date mit einer vorbestimmten Lernausgleichsverstärkung $K_L$ multipliziert und ausgibt;

eine Speichereinheit (47) zur Ausgabe eines Störungskorrekturwerts ($i^*_{LK}(\theta)$) entsprechend der gegenwärtigen Winkelstellung ($\theta$) des Motors (25) aus darin gespeicherten Störungskorrekturwerten, und zur Speicherung eines gegenwärtig eingegebenen Störungskorrekturwerts an einer Speicherstelle, die der gegenwärtigen Winkelstellung ($\theta$) des Motors entspricht;

einen ersten Addierer (45) zur Addition des Ausgangs der genannten Verstärkungseinrichtung (43) und des Störungskorrekturwerts ($i^*_{LK}(\theta)$), der von der genannten Speichereinheit (47) ausgegeben wird, und zum Erhalt eines Störungskorrekturwerts entsprechend der gegenwärtigen Winkelstellung ($\theta$) des Motors (25);

ein Tiefpaßfilter (41) zur Tiefpaßfilterung des Störungskorrekturwertes, der durch dem genannten ersten Addierer (45) erhalten wird; und

einen zweiten Addierer zur Ausgabe des Ausgangs des genannten Tiefpaßfilters (41) als einen Störungskorrekturwert, der der gegenwärtigen Winkelstellung ($\theta$) des Motors (25) entspricht, an die genannte Speichereinheit (47).

**10.** Die Drehzahlregelvorrichtung für einen Rotationsmotor gemäß Anspruch 9, wobei das genannte Tiefpaßfilter (41) eine Abschneidefrequenz aufweist, die die Störung aufgrund eines welligen Drehmoments des Motors (25) unterdrückt.

**11.** Die Drehzahlregelvorrichtung für einen Rotationsmotor gemäß Anspruch 9 oder 10, wobei das genannte Tiefpaßfilter (41) ein IIR Filter ist.

**12.** Die Drehzahlregelvorrichtung für einen Rotationsmotor gemäß Anspruch 9, 10 oder 11, wobei der genannte vorbestimmte Lernausgleichsverstärkungswert $K_L$ die Beziehung $0<K_L<K_P$ aufweist, wobei $K_P$ eine proportionale Verstärkung des Drehzahlreglers (21) ist, wenn der Drehzahlfehler ($\omega_e$) in den Lernwiederholungsschritten verwendet wird, während er die Beziehung $0<K_L<1$ aufweist, wenn der Strombefehl ($i_v$*) darin verwendet wird.

**13.** Die Drehzahlregelvorrichtung für einen Rotationsmotor gemäß Anspruch 9, 10, 11 und 12, wobei der genannte Addierer (47) den Ausgang der genannten Verstärkungseinrichtung (43) und den Ausgang der genannten Speichereinheit (47) addiert, wenn die Lernwiederholungsschritte durchgeführt werden, während der genannte Addierer (45) den Ausgang selbst der genannten Speicherreinheit (47) an das genannte Tiefpaßfilter (41) ausgibt.

**14.** Die Drehzahlregelvorrichtung für einen Rotationsmotor gemäß Anspruch 13, wobei die genannten Lernwiederholungsschritte durchgeführt werden, wenn sich der Motor (25) in einem stabilen Zustand gemäß der eingegebenen Bezugswinkelgeschwindigkeit ($\omega$*) dreht.

**15.** Eine Drehzahlregelvorrichtung für einen Rotationsmotor gemäß Anspruch 1, wobei die Vorrichtung umfaßt:

eine Impulssignal- und Frequenzsignalerzeugungseinrichtung (33, 35) zur Erzeugung eines Impulssignals (PG) und eines Frequenzsignals (FG) gemäß der Drehung des Motors (25);

eine Speichereinheit (55) zur Speicherung von Störungskorrekturwerten ($i^*_{LK}$) gemäß einer Umdrehung des Motors (25); und

eine Regeleinrichtung (51) zur Erzeugung des korrigierten Strombefehls (i*) entsprechend einer gegenwärtigen Winkelstellung ($\theta$) des genannten Motors (25), indem das Impulssignal (PG) und das Frequenzsignal (FG) des Motors (25) und der Störungskorrekturwert ($i^*_{LK}$) verwendet werden, der in der genannten Speichereinheit (55) gespeichert ist, und der erzeugte korrigierte Strombefehl (i*) dem genannten Stromregler (23) zugeführt wird, wobei die genannte Regeleinrichtung (51) die Schritte durchführt:

(a) Erhalten der gegenwärtigen Winkelstellung des Motors (25) und eines entsprechenden Strombefehls hierfür, wobei das Impulssignal (PG) und das Frequenzsignal (FG) des genannten Motors verwendet werden;

(b) Korrigieren der Wirkung der Störung, die als eine Funktion einer Winkelstellung und einer Winkelgeschwindigkeit ausgedrückt wird, die an den Motor (25) angelegt wird, mittels Lernwiederholungsschritten, wobei die eingegebene Bezugswinkelgeschwindigkeit ($\omega$*) des genannten Motors (25), die erhaltene gegenwärtige Winkelstellung und der entsprechende Strombefehl verwendet werden, ein Störungskorrekturwert erzeugt wird, bei dem Rauschen hoher Frequenz, das bei den Lernwiederholungsschritten erzeugt wird, entfernt wird, und der erzeugte Störungskorrekturwert an einer Speicherstelle entsprechend der gegenwärtigen Winkelstellung in der genannten Speichereinheit (55) gespeichert wird; und

(c) Erhalten des korrigierten Strombefehls (i*), der an den genannten Stromregler (23) angelegt wird, indem ein Wert des erhaltenen Strombefehls und der erzeugte Störungskorrekturwert addiert werden.

**16.** Die Drehzahlregelvorrichtung für einen Rotationsmotor gemäß Anspruch 15, wobei der genannte Schritt (b) den Unterschritt (b1)umfaßt, den Strombefehl entsprechend der genannten gegenwärtigen Winkelstellung tiefpaßzufiltern.

**17.** Die Drehzahlregelvorrichtung für einen Rotationsmotor gemäß Anspruch 16, wobei der genannte Unterschritt (b1) eine Abschneidefrequenz verwendet, die die Störung aufgrund des welligen Drehmoments des Motors (25) unterdrückt.

**18.** Die Drehzahlregelvorrichtung für einen Rotationsmotor gemäß Anspruch 16, wobei der genannte Schritt (b) die Unterschritte umfaßt:

(b2) Multiplizieren des genannten tiefpaßgefilterten Strombefehls mit einer vorbestimmten Lernausgleichsverstärkung und Ausgeben derselben; und

(b3) Addieren des Störungskorrekturwerts, entsprechend der gegenwärtigen Winkelstellung des Motors (25) aus Störungskorrekturwerten, die in der genannten Speichereinheit (55) gespeichert sind, und des bei dem genannten Schritt (b2) erhaltenen Signals, wodurch ein neuer Störungskorrekturwert erhalten wird, der der gegenwärtigen Winkelstellung des Motors (25) entspricht,

wobei die Schritte, die genannten neuen Störungskorrekturwerte zu erhalten, wiederholt durchgeführt werden, bis alle neuen Störungskorrekturwerte erhalten werden, die sich auf einer Umdrehung des Motors (25) beziehen.

**19.** Die Drehzahlregelvorrichtung für einen Rotationsmotor gemäß Anspruch 18, wobei die genannte vorbestimmte Lemausgleichsverstärkung größer als null und kleiner als 1 ist.

**20.** Die Drehzahlregelvorrichtung für einen Rotationsmotor gemäß Anspruch 15, wobei die genannte Regeleinrichtung (51) den Störungskorrekturwert entsprechend, der gegenwärtigen Winkelstellung aus Störungskorrekturwerten verwendet, die in der genannten Speicherreinheit (55) gespeichert sind, um einen korrigierten Strombefehl zu erhalten, wenn der aus dem Impulssignal (PG) und dem Frequenzsignal (FG) des genannten Motors (25) erhaltene Strombefehl kleiner als ein vorbestimmter Wert ist.

**21.** Die Drehzahlregelvorrichtung für einen Rotationsmotor gemäß Anspruch 15, wobei die genannte Regeleinrichtung (51) einen Störungskorrekturwert durch Lernwiederholungsschntte erhält, wenn sich der Motor (25) in einem stabilen Zustand gemäß der eingegebenen Bezugswinkelgeschwindigkeit dreht.

## Revendications

**1.** Régulateur de vitesse d'un moteur rotatif, le régulateur de vitesse comprenant:

un moteur (25) destiné à tourner à une vitesse qui dépend d'un couple de commande ($\tau$*) et à fournir une position angulaire actuelle ($\theta$) et une vitesse angulaire actuelle ($\omega$) du moteur (25);
un moyen (A3) de mesure de vitesse destiné à obtenir un écart de vitesse ($\omega_e$) représentant une différence entre une vitesse angulaire de référence ($\omega$*) fournie en entrée et la vitesse angulaire actuelle ($\omega$);
un contrôleur de vitesse (21) destiné à recevoir ledit écart de vitesse ($\omega_e$) et à débiter un courant de commande ($i_v$*) destiné à réguler la vitesse de rotation du moteur (25);
un compensateur à apprentissage (27) destiné à corriger l'effet d'une perturbation et à fournir une valeur de correction de perturbation ($i_L$*) obtenue;
un moyen (A4) de compensation de la commande en vitesse destiné à obtenir un courant de commande corrigé (i*) par addition de la valeur du courant de commande ($i_v$*) fournie par le contrôleur de vitesse (21) à la valeur de correction de perturbation ($i_L$*) obtenue par ledit compensateur à apprentissage (27); et
un contrôleur de courant (23) destiné à recevoir le courant de commande corrigé (i*) et à fournir le couple de commande ($\tau$*) au moteur (25),
l'appareil étant caractérisé par le fait que le compensateur à apprentissage (27) corrige l'effet de la perturbation appliquée au moteur (25), exprimée en fonction d'une position angulaire ($\theta$) et d'une vitesse angulaire, par étapes répétitives d'apprentissage utilisant la vitesse angulaire de référence ($\omega$*) entrée, l'un d'entre l'écart de vitesse ($\omega_e$) dudit moyen de mesure de vitesse (A3) et le courant de commande ($i_v$*) dudit contrôleur de vitesse (21), et la position angulaire actuelle ($\theta$) du moteur (25), en retirant un bruit haute fréquence produit par les étapes d'apprentissage répétitives, et fournit la valeur ainsi obtenue de correction de perturbation ($i_L$*).

**2.** Régulateur de vitesse d'un moteur rotatif selon la revendication 1, dans lequel ledit compensateur à apprentissage (27) comprend un filtre passe-bas (41) destiné à réaliser un filtrage passe-bas de celui d'entre l'écart de vitesse ($\omega_e$) et le courant de commande ($i_v$*) qui sera utilisé dans les étapes d'apprentissage répétitives.

**3.** Régulateur de vitesse d'un moteur rotatif selon la revendication 2, dans lequel ledit filtre passe-bas (41) présente une fréquence de coupure permettant de supprimer la perturbation due à un couple d'engrènement du moteur (25).

**4.** Régulateur de vitesse d'un moteur rotatif selon la revendication 2 ou 3, dans lequel ledit filtre passe-bas (41) est un filtre à réponse impulsionnelle infinie.

**5.** Régulateur de vitesse d'un moteur rotatif selon la revendication 2, 3 ou 4, dans lequel ledit compensateur à apprentissage (27) comprend en outre:

un amplificateur (43) destiné à multiplier la sortie dudit filtre passe-bas (41) par un gain de compensation d'apprentissage $K_L$ prédéterminé et à fournir le résultat;
une unité de mémoire (47) destinée à fournir une valeur de correction de perturbation ($i^*_{LK}(\theta)$) correspondant à la position angulaire actuelle ($\theta$) du moteur (25) parmi des valeurs de correction de perturbation qu'elle mémorise, et à mémoriser une valeur de correction de perturbation actuellement entrée en une position de mémoire qui correspond à la position angulaire actuelle ($\theta$); et
un additionneur (45) destiné à additionner la sortie dudit amplificateur (43) et ladite valeur de correction de perturbation ($i^*_{LK}(\theta)$) fournie par ladite unité de mémoire (47), pour obtenir une valeur de correction de perturbation correspondant à la position angulaire actuelle ($\theta$) du moteur (25), et à fournir la valeur obtenue à ladite unité de mémoire (47).

**6.** Régulateur de vitesse d'un moteur rotatif selon la revendication 5, dans lequel ladite valeur prédéterminée $K_L$ de gain de compensation d'apprentissage satisfait à une relation $0<K_L<K_P$, dans laquelle $K_P$ est un gain proportionnel du contrôleur de vitesse (21), lorsque l'écart de vitesse ($\omega_e$) est utilisé dans les étapes d'apprentissage répétitives, tandis qu'elle satisfait à une relation $0<K_L<1$ lorsque le courant de commande ($i_v^*$) y est utilisé.

**7.** Régulateur de vitesse d'un moteur rotatif selon la revendication 5, dans lequel ledit additionneur (45) additionne la sortie dudit amplificateur (43) et la sortie de ladite unité de mémoire (47) lorsque les étapes répétitives d'apprentissage sont exécutées, ladite opération d'addition n'étant pas réalisée lorsque les étapes répétitives d'apprentissage ne sont pas exécutées.

**8.** Régulateur de vitesse d'un moteur rotatif selon la revendication 7, dans lequel lesdites étapes répétitives d'apprentissage sont exécutées lorsque le moteur (25) tourne à un régime régulier conformément à la vitesse angulaire de référence ($\omega^*$) entrée.

**9.** Régulateur de vitesse d'un moteur rotatif selon la revendication 1, dans lequel ledit compensateur à apprentissage (27) comprend:

un amplificateur (43) destiné à recevoir celui d'entre l'écart de vitesse ($\omega_e$) et le courant de commande ($i_v^*$) à utiliser dans les étapes répétitives d'apprentissage, et à multiplier la donnée reçue par un gain de compensation d'apprentissage $K_L$ prédéterminé et à fournir le résultat;
une unité de mémoire (47) destinée à fournir une valeur de correction de perturbation ($i^*_{LK}(\theta)$) correspondant à la position angulaire actuelle ($\theta$) du moteur (25) parmi des valeurs de correction de perturbation qu'elle mémorise, et à mémoriser une valeur de correction de perturbation actuellement entrée en une position de mémoire qui correspond à la position angulaire actuelle ($\theta$) du moteur (25);
un premier additionneur (45) destiné à additionner la sortie dudit amplificateur (43) et ladite valeur de correction de perturbation ($i^*_{LK}(\theta)$) fournie par ladite unité de mémoire (47), et à obtenir une valeur de correction de perturbation correspondant à la position angulaire actuelle ($\theta$) du moteur (25);
un filtre passe-bas (41) destiné à réaliser un filtrage passe-bas de la valeur de correction de perturbation obtenue par ledit premier additionneur (45); et
un deuxième additionneur destiné à fournir la sortie dudit filtre passe-bas (41) en tant que valeur de correction de perturbation correspondant à la position angulaire actuelle ($\theta$) du moteur (25), à ladite unité de mémoire (47).

**10.** Régulateur de vitesse d'un moteur rotatif selon la revendication 9, dans lequel ledit filtre passe-bas (41) présente une fréquence de coupure permettant de supprimer la perturbation due au couple d'engrènement du moteur (25).

**11.** Régulateur de vitesse d'un moteur rotatif selon la revendication 9 ou 10, dans lequel ledit filtre passe-bas (41) est un filtre à réponse impulsionnelle finie.

**12.** Régulateur de vitesse d'un moteur rotatif selon la revendication 9, 10 ou 11, dans lequel ladite valeur prédéterminée de gain de compensation d'apprentissage satisfait à une relation $0<K_L<K_P$, dans laquelle $K_P$ est un gain proportionnel du contrôleur de vitesse (21), lorsque l'écart de vitesse ($\omega_e$) est utilisé dans les étapes d'apprentissage répétitives, tandis qu'elle satisfait à une relation $0<K_L<1$ lorsque le courant de commande ($i_v^*$) y est utilisé.

**13.** Régulateur de vitesse d'un moteur rotatif selon la revendication 9, 10, 11 ou 12, dans lequel ledit additionneur (45) additionne la sortie dudit amplificateur (43) et la sortie de ladite unité de mémoire (47) lorsque les étapes répétitives d'apprentissage sont exécutées, tandis que ledit additionneur (45) fournit en l'état la sortie de ladite unité de mémoire (47) audit filtre passe-bas (41).

**14.** Régulateur de vitesse d'un moteur rotatif selon la revendication 13, dans lequel lesdites étapes répétitives d'apprentissage sont exécutées lorsque le moteur (25) tourne à un régime régulier conformément à la vitesse angulaire de référence (ω*) entrée.

**15.** Régulateur de vitesse d'un moteur rotatif selon la revendication 1, l'appareil comprenant:

des moyens (33, 35) de production de signal d'impulsion et de signal de fréquence, destinés à produire un signal d'impulsion (PG) et un signal de fréquence (FG) d'après la rotation du moteur (25);
une unité de mémoire (55) destinée à mémoriser des valeurs de correction de perturbation ($i^*_{LK}$) en fonction d'un angle de rotation du moteur (25); et
un moyen de commande (51) destiné à produire le courant de commande corrigé correspondant à une position angulaire actuelle (θ) dudit moteur (25), en utilisant le signal d'impulsion (PG) et le signal de fréquence (FG) dudit moteur (25) et la valeur de correction de perturbation ($i^*_{LK}$) mémorisée dans ladite unité de mémoire (55) et à fournir le courant de commande corrigé (i*) obtenu audit contrôleur de courant (23), dans lequel ledit moyen de commande (51) exécute les étapes consistant:

(a) à obtenir la position angulaire actuelle du moteur (25) et un courant de commande correspondant du moteur en utilisant le signal d'impulsion (PG) et le signal de fréquence (FG) dudit moteur;
(b) à corriger l'effet de la perturbation appliquée au moteur (25), exprimé en fonction d'une position angulaire et d'une vitesse angulaire, par des étapes répétitives d'apprentissage utilisant la vitesse angulaire de référence (ω*) entrée dudit moteur (25), la position angulaire actuelle obtenue et le courant de commande correspondant, à produire une valeur de correction de perturbation dans laquelle un bruit haute fréquence, produit lors des étapes répétitives d'apprentissage, est retiré, et à mémoriser la valeur de correction de perturbation en une position de mémoire correspondant à la position angulaire actuelle dans ladite unité de mémoire (55); et
(c) à obtenir le courant de commande corrigé (i*) appliqué audit contrôleur de courant (23) par addition de la valeur obtenue du courant de commande à la valeur de correction de perturbation produite.

**16.** Régulateur de vitesse d'un moteur rotatif selon la revendication 15, dans lequel ladite étape (b) comprend la sous-étape (b1) de filtrage passe-bas du courant de commande correspondant à ladite position angulaire actuelle.

**17.** Régulateur de vitesse d'un moteur rotatif selon la revendication 16, dans lequel ladite sous-étape (b1) utilise une fréquence de coupure permettant de supprimer la perturbation due au couple d'engrènement du moteur (25).

**18.** Régulateur de vitesse d'un moteur rotatif selon la revendication 16, dans lequel ladite étape (b) comprend les sous-étapes consistant:

(b2) à multiplier ledit courant de commande filtré passe-bas par un gain de compensation d'apprentissage prédéterminé et à fournir le résultat; et
(b3) à additionner la valeur de correction de perturbation correspondant à la position angulaire actuelle du moteur (25), parmi des valeurs de correction de perturbation mémorisées dans ladite unité de mémoire (55), et le signal obtenu à ladite étape (b2), pour obtenir ainsi une nouvelle valeur de correction de perturbation qui correspond à la position angulaire actuelle du moteur (25);

les étapes consistant à obtenir lesdites nouvelles valeurs de correction de perturbation étant exécutées de façon répétitive jusqu'à obtenir toutes les nouvelles valeurs de correction de perturbation qui correspondent à un tour du moteur (25).

**19.** Régulateur de vitesse d'un moteur rotatif selon la revendication 18, dans lequel ledit gain de compensation d'apprentissage prédéterminé est d'amplitude supérieure à zéro et inférieure à 1.

**20.** Régulateur de vitesse d'un moteur rotatif selon la revendication 15, dans lequel ledit moyen de commande (51) adopte la valeur de correction de perturbation correspondant à la position angulaire actuelle, parmi les valeurs de correction de perturbation mémorisées dans ladite unité de mémoire (55), pour obtenir un courant de commande corrigé si le courant de commande obtenu à partir du signal d'impulsion (PG) et du signal de fréquence (FG) dudit moteur (25) est inférieur à une valeur prédéterminée.

**21.** Régulateur de vitesse d'un moteur rotatif selon la revendication 15, dans lequel ledit moyen de commande (51) obtient une valeur de correction de perturbation par étapes répétitives d'apprentissage lorsque le moteur (25) tourne en régime régulier conformément à la vitesse angulaire de référence entrée.

FIG. 1 (PRIOR ART)

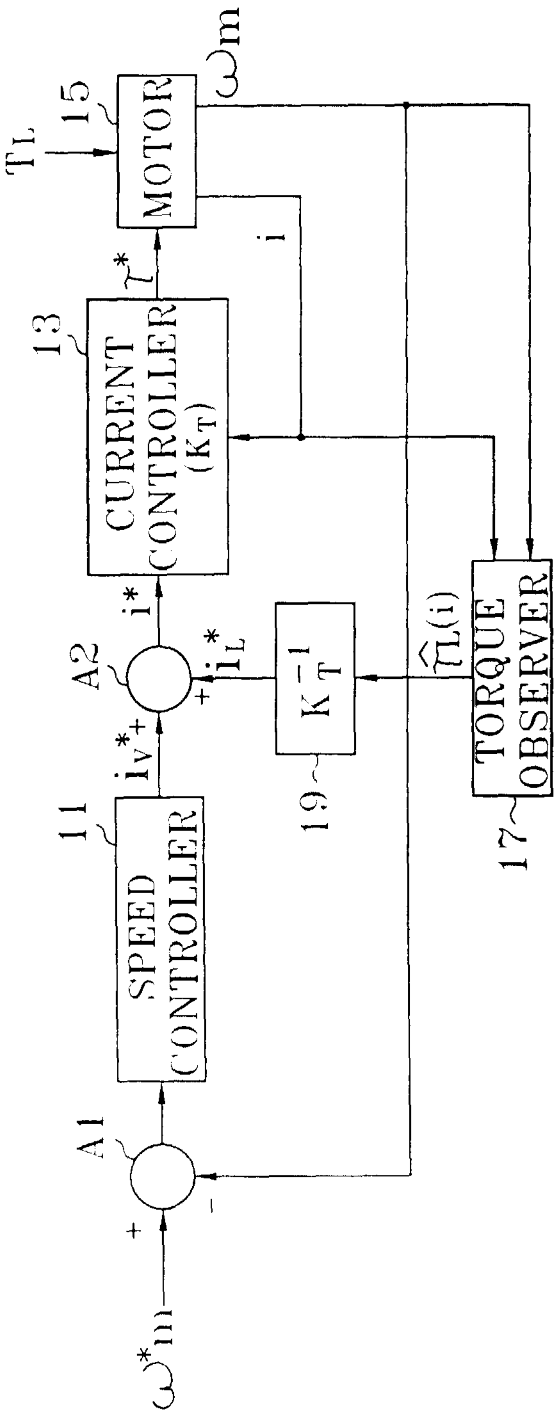

FIG. 2

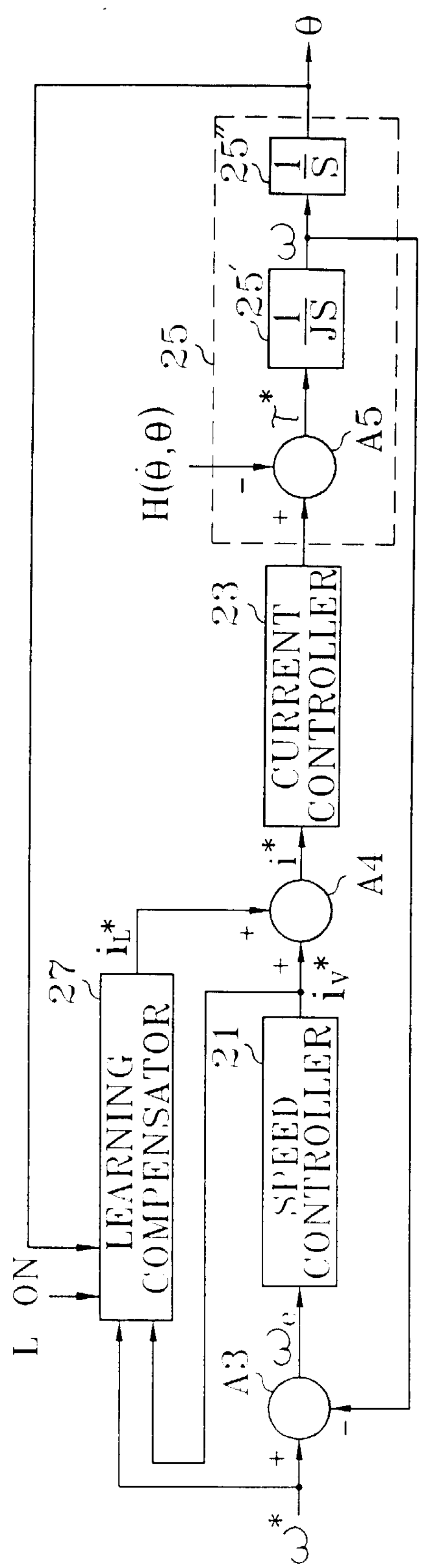
L ON
LEARNING COMPENSATOR
27
SPEED CONTROLLER
21
CURRENT CONTROLLER
23
A3
A4
A5
$\omega^*$
$\omega_e$
$i_L^*$
$i_V^*$
$i^*$
$\tau^*$
$H(\dot{\theta},\theta)$
25
25'
25''
$\frac{1}{JS}$
$\frac{1}{S}$
$\omega$
$\theta$

FIG. 3

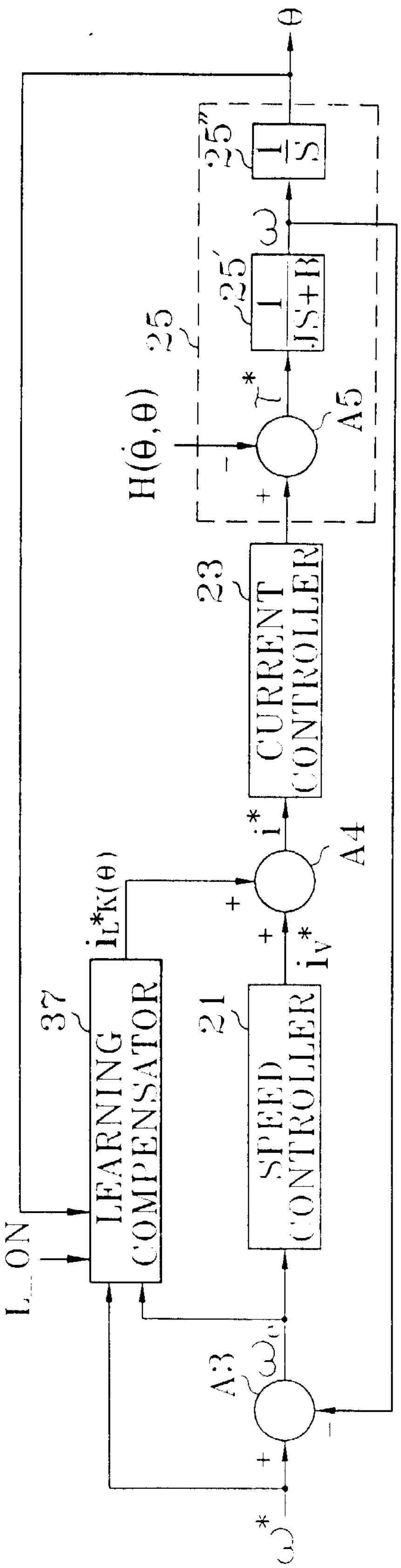
LEARNING COMPENSATOR
37
SPEED CONTROLLER
21
CURRENT CONTROLLER
23
25
25'
25"
A3
A4
A5
L_ON
H(θ̇,θ)
θ

FIG. 4

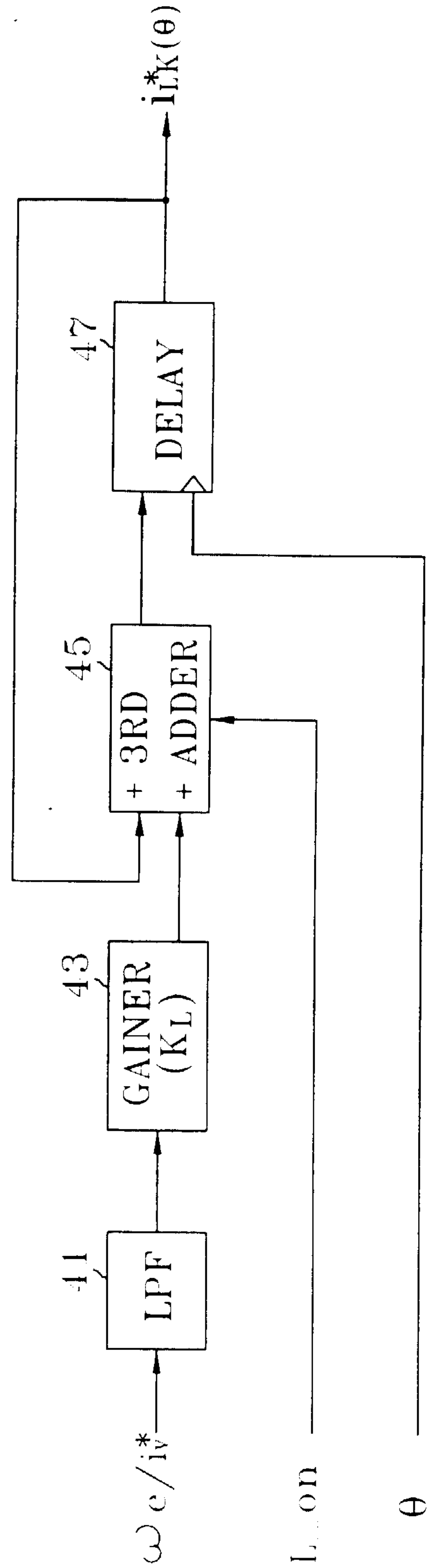

FIG. 5

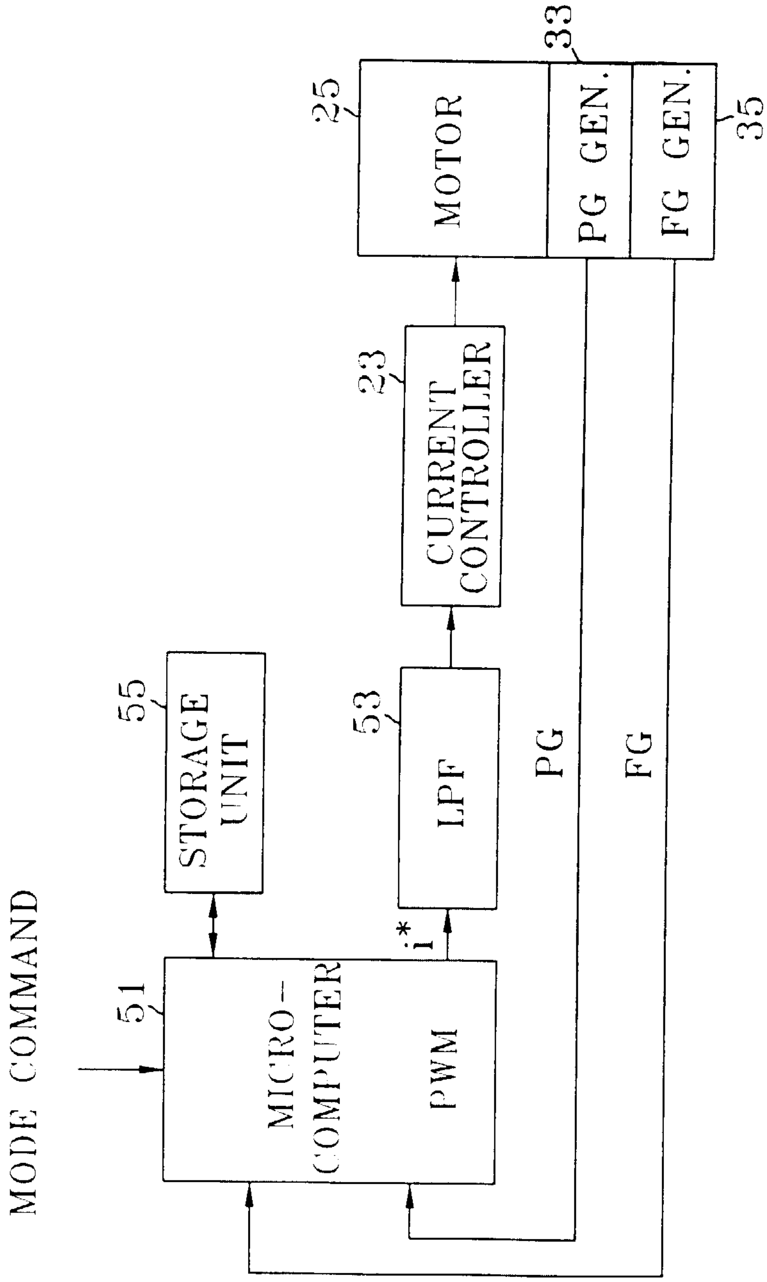
MODE COMMAND
51
MICRO-COMPUTER
PWM
55
STORAGE UNIT
i*
53
LPF
23
CURRENT CONTROLLER
25
MOTOR
33
PG GEN.
35
FG GEN.
PG
FG

FIG. 6

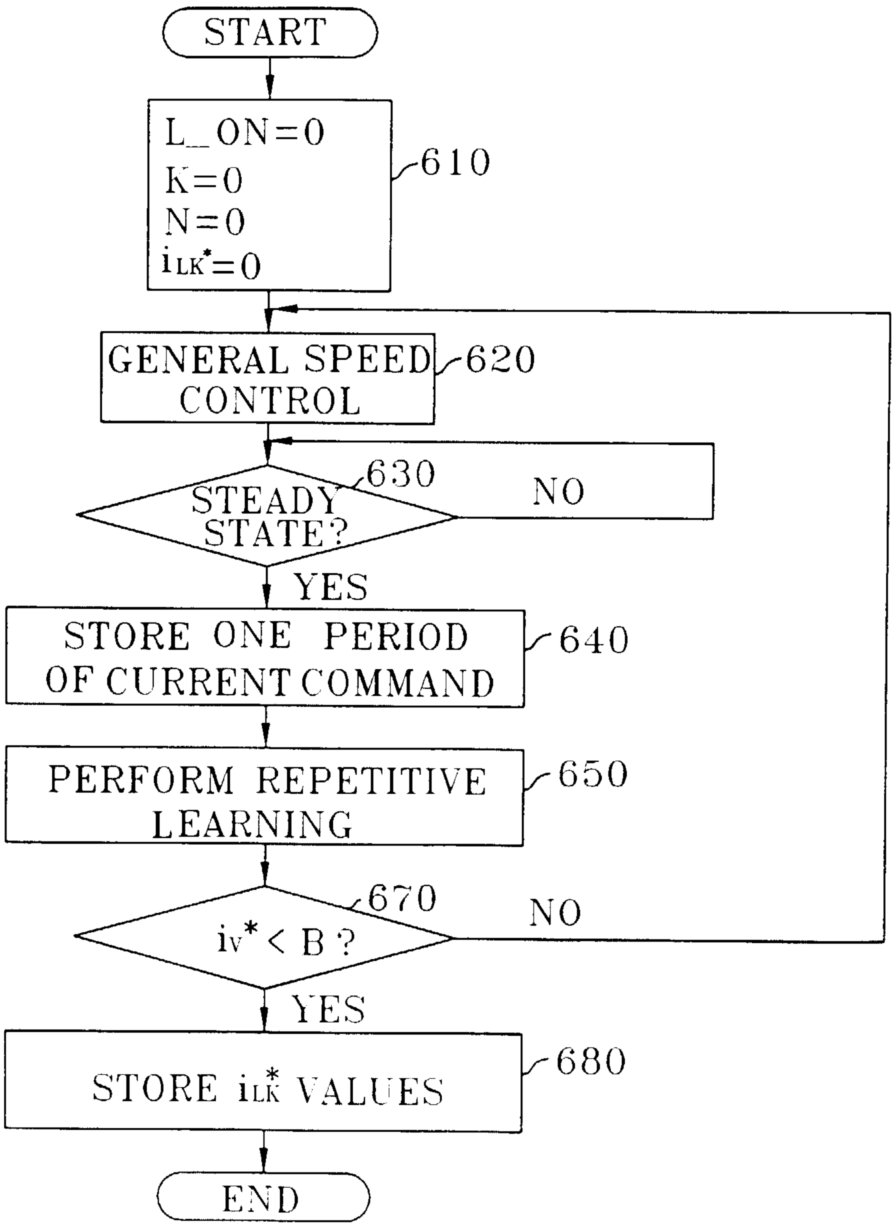
START
L_ON=0
K=0
N=0
iLK*=0
610
GENERAL SPEED CONTROL
620
STEADY STATE?
630
NO
YES
STORE ONE PERIOD OF CURRENT COMMAND
640
PERFORM REPETITIVE LEARNING
650
iv* < B ?
670
NO
YES
STORE iLK* VALUES
680
END

FIG. 7A

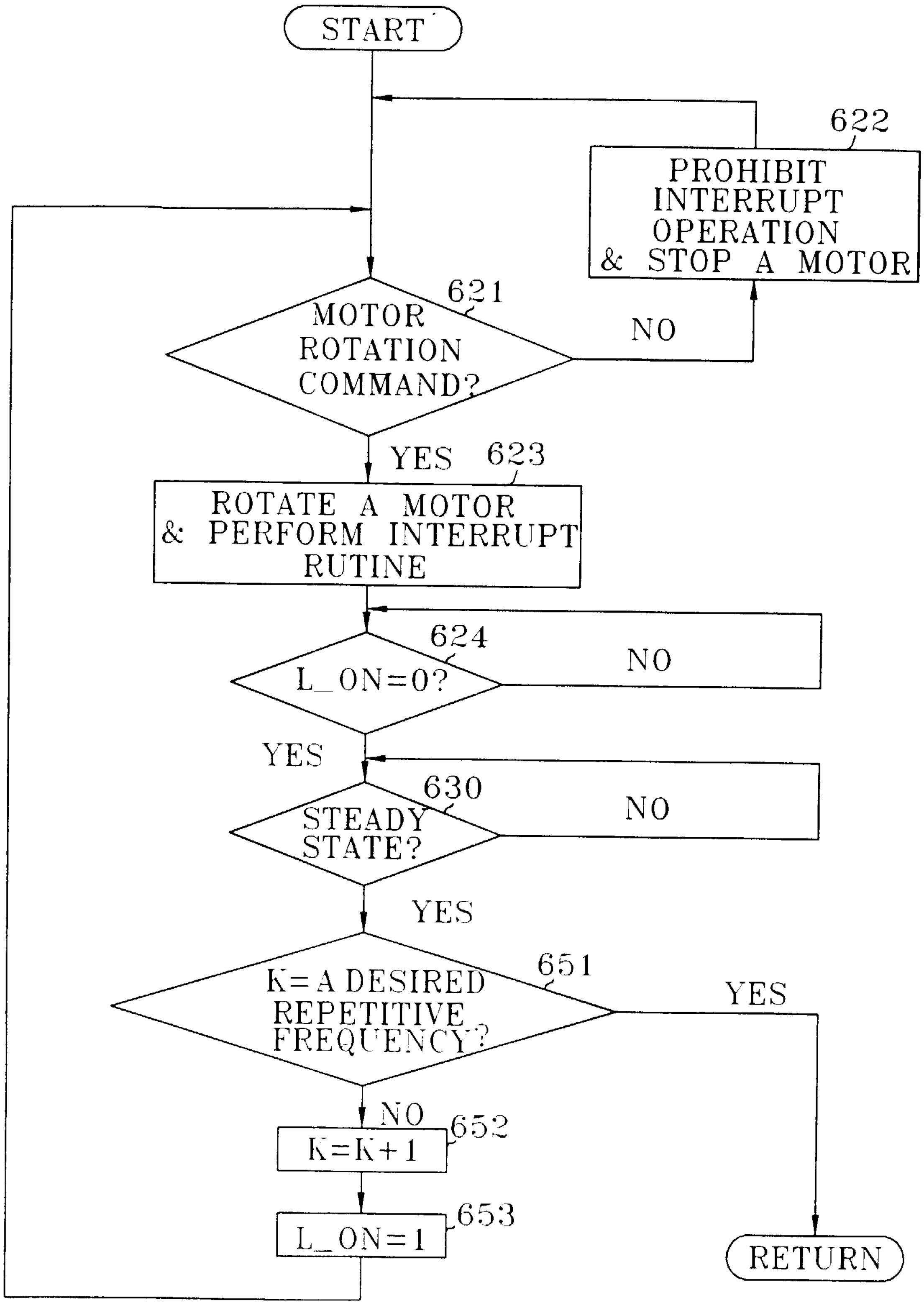
START
622
PROHIBIT INTERRUPT OPERATION & STOP A MOTOR
621
MOTOR ROTATION COMMAND?
NO
YES
623
ROTATE A MOTOR & PERFORM INTERRUPT RUTINE
624
L_ON=0?
NO
YES
630
STEADY STATE?
NO
YES
651
K=A DESIRED REPETITIVE FREQUENCY?
YES
NO
652
K=K+1
653
L_ON=1
RETURN

FIG. 7B

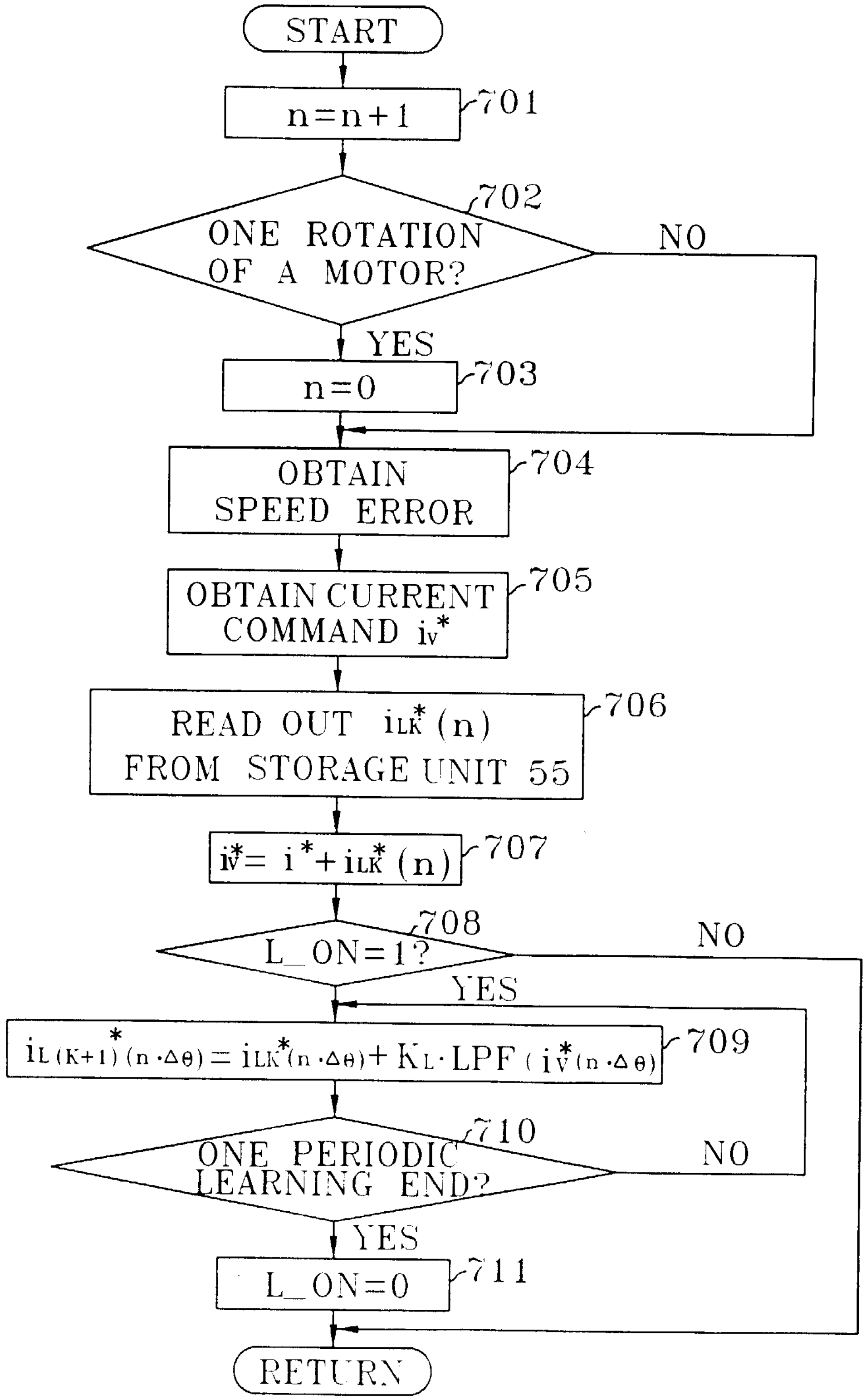
START
n=n+1
701
ONE ROTATION OF A MOTOR?
702
NO
YES
n=0
703
OBTAIN SPEED ERROR
704
OBTAIN CURRENT COMMAND iv*
705
READ OUT iLK* (n) FROM STORAGE UNIT 55
706
iv*= i*+iLK* (n)
707
L_ON=1?
708
NO
YES
iL(K+1)*(n·Δθ) = iLK*(n·Δθ)+ KL·LPF (iv*(n·Δθ))
709
ONE PERIODIC LEARNING END?
710
NO
YES
L_ON=0
711
RETURN